(19) Europäisches Patentamt
European Patent Office
Office européen des brevets

(11) **EP 4 207 361 B1**

(12) **EUROPEAN PATENT SPECIFICATION**

(45) Date of publication and mention
of the grant of the patent:
**09.10.2024 Bulletin 2024/41**

(21) Application number: **21939977.1**

(22) Date of filing: **09.11.2021**

(51) International Patent Classification (IPC):
$H01M\ 4/13^{(2010.01)}$     $H01M\ 4/583^{(2010.01)}$
$H01M\ 4/66^{(2006.01)}$     $H01M\ 10/052^{(2010.01)}$
$H01M\ 4/36^{(2006.01)}$     $H01M\ 4/133^{(2010.01)}$
$H01M\ 4/1393^{(2010.01)}$     $H01M\ 4/587^{(2010.01)}$
$H01M\ 10/0525^{(2010.01)}$     $H01M\ 4/02^{(2006.01)}$

(52) Cooperative Patent Classification (CPC):
**H01M 4/366; H01M 4/02; H01M 4/13; H01M 4/133;**
**H01M 4/1393; H01M 4/36; H01M 4/364;**
**H01M 4/583; H01M 4/587; H01M 4/663;**
**H01M 10/052; H01M 10/0525;** H01M 2004/021;
H01M 2004/027; H01M 2220/20;     (Cont.)

(86) International application number:
**PCT/CN2021/129506**

(87) International publication number:
**WO 2023/082039 (19.05.2023 Gazette 2023/20)**

(54) **NEGATIVE ELECTRODE SHEET, SECONDARY BATTERY, BATTERY MODULE, BATTERY PACK, AND ELECTRIC DEVICE**

NEGATIVELEKTRODENPLATTE, SEKUNDÄRBATTERIE, BATTERIEMODUL, BATTERIEPACK UND ELEKTRISCHE VORRICHTUNG

FEUILLE D'ÉLECTRODE NÉGATIVE, BATTERIE SECONDAIRE, MODULE DE BATTERIE, BLOC-BATTERIE ET DISPOSITIF ÉLECTRIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**05.07.2023 Bulletin 2023/27**

(73) Proprietor: **Contemporary Amperex Technology**
**(Hong Kong) Limited**
**Central, Central And Western District (HK)**

(72) Inventors:
• **LV, Shuqin**
**Ningde, Fujian 352100 (CN)**
• **LI, Xiaowei**
**Ningde, Fujian 352100 (CN)**
• **PEI, Zhenxing**
**Ningde, Fujian 352100 (CN)**

(74) Representative: **Behr, Wolfgang**
**Lorenz Seidler Gossel**
**Rechtsanwälte Patentanwälte**
**Partnerschaft mbB**
**Widenmayerstraße 23**
**80538 München (DE)**

(56) References cited:
WO-A1-2021/109133     CN-A- 101 202 338
CN-A- 103 633 293     CN-A- 111 490 253
CN-A- 112 467 079     CN-A- 112 735 836
CN-A- 113 097 446     CN-A- 113 437 252
JP-A- 2013 149 403     US-A1- 2004 048 152

(52) Cooperative Patent Classification (CPC): (Cont.)
Y02E 60/10

## Description

### TECHNICAL FIELD

This application relates to the technical field of lithium batteries, and in particular, to a negative electrode plate, a secondary battery, a battery module, a battery pack, and an electric apparatus.

### BACKGROUND

In recent years, lithium-ion batteries are being applied to increasingly extensive fields. For example, lithium-ion batteries are extensively applied in storage power systems such as hydropower, thermal power, wind power, and solar power stations, and many fields such as electric tools, electric bicycles, electric motorcycles, electric cars, military equipment, and aerospace. Currently, the extensive application of lithium-ion batteries poses higher requirements on comprehensive performance of batteries. More application scenarios require that traction batteries should have both high energy density and good charge-discharge characteristics. A negative electrode is one of most critical components of a lithium-ion battery whose design directly affects performance of the battery, especially charge-related characteristics of the battery. How a battery having both desirable energy density and kinetic performance can be obtained by optimizing the design of the negative electrode plate is currently a common challenge in the industry. From the prior art document CN 112 735 836 A, a negative pole piece of a lithium ion capacitor is known. WO 2021/109133 A1 discloses a secondary battery. From CN 103 633 293 A, a lithium ion battery negative electrode is known. CN 113 097 446 A discloses a a negative electrode for a non-aqueous electrolyte secondary battery.

### SUMMARY

An objective of this application is to provide a negative electrode plate to meet an existing requirement. This application further provides a secondary battery, and a battery

### SUMMARY

An objective of this application is to provide a negative electrode plate to meet an existing requirement. This application further provides a secondary battery, and a battery module, battery pack, and electric apparatus using such negative electrode plate. The inventors of this application have found that by using two or more active material layers in a negative electrode and adjusting a relationship between layer spacings and that between coating weights of the active material layers, it is possible to obtain a battery negative electrode having both higher energy density and better charge-discharge kinetic performance.

To achieve the foregoing objective, a first aspect of this application provides a negative electrode plate, including a negative electrode current collector and active material layers disposed on at least one surface of the negative electrode current collector, where the active material layers include a first active material layer and a second active material layer disposed on a surface of the first active material layer, the first active material layer includes a first active material, the second active material layer includes a second active material, and the active material layers satisfy $\alpha \times CW_2 \leq CW_1$, where

$$\alpha = \frac{d2}{d1}$$

$\alpha$ is a relative factor of layer spacings, where and $1 \leq \alpha \leq 1.12$;

$d_1$ is a layer spacing corresponding to a d002 peak of the first active material, in units of nm;

$d_2$ is a layer spacing corresponding to a d002 peak of the second active material, in units of nm;

$CW_1$ is mass per unit area of the first active material layer disposed on the negative electrode current collector, in units of g/m$^2$; and

$CW_2$ is mass per unit area of the second active material layer disposed on the negative electrode current collector, in units of g/m$^2$.

Therefore, by using two or more active material layers in a negative electrode and adjusting a relationship between layer spacings and that between coating weights of the active material layers, it is possible to obtain a battery negative electrode having both higher energy density and better charge-discharge kinetic performance. More specifically, the inventors of this application have found that when two active material layers are applied on one side of the current collector of the negative electrode plate with the active material layer spacing of the second active material layer larger than the active material layer spacing of the first active material layer, during migration of lithium ions from a positive electrode to the negative electrode, because of the large spacing of the surface material layer, impedance to intercalation of lithium ions is low so that lithium ions can be quickly intercalated into the surface active material. Therefore, precipitation of lithium ions on the surface of the negative electrode plate due to an excessive charging rate is avoided. Because a larger spacing of the negative active material layer means a lower capacity of the material, a heavier coating weight of the second active material layer has greater impact on the overall extractable capacity of the negative electrode plate. Taking the extractable capacity of the negative electrode plate and the charging window both into account, this application defines the coating weight of the second active material layer. A larger active material layer spacing of the second active material layer represents a stronger charging capability and a lower capacity, and correspondingly, just a small coating weight is enough to achieve a good charging level. When the active material layer spacing of the second active material layer is smaller, its charging capability becomes weaker, and the capacity is higher. In this case, in order that the electrode plate has relatively good charge performance on the whole, a proportion of the coating weight of the second active material layer to a total coating weight of the electrode plate should be increased. The inventors of this application have unexpectedly found that, with a structure with two active material layers used, the first active material layer having a small active material layer spacing and a high capacity makes the electrode plate and the battery have relatively high energy density; and the second active material layer having a large active material layer spacing allows a lower impedance to lithium intercalation on the surface of the negative electrode, avioding deposition of lithium ions on the surface of the negative electrode plate during high-rate charging, and increasing the battery charging window. Therefore, the negative electrode of the battery whose active material layers satisfy the foregoing relationships has both desirable energy density and charge-discharge kinetic performance.

In any one of the embodiments of this application, the active material layers satisfy $CW_2 \geq \frac{3}{17}\alpha \times CW_1$.

To take both the energy density and charge performance of the battery into account, avoiding overdesign of one performance causing inadaquete design of the other, the inventors further define the relationship between coating weights and that between layer spacings of the first active material layer and the second active material layer based on an actual test results. When these relationships are satisfied, both rate performance and energy density of the negative electrode plate and the battery can be improved properly.

In any one of the embodiments of this application, $\frac{CW1}{CW2}$ is inversely proportional to $\frac{d1 \times Da50}{d2 \times Db50}$, and $0.2 \leq \frac{CW2}{CW2 + CW1} \leq 0.45$, where

Da50 is a volume median particle size of the first active material, in units of $\mu$m; and
Db50 is a volume median particle size of the second active material, in units of $\mu$m.

Based on the layer spacing and particle size of each active material layer, the coating weights of the active material layers are adjusted, so that the electrode plate and the battery has both fast charge performance and high energy density.

In any one of the embodiments of this application, the volume median particle size Da50 of the first active material and the volume median particle size Db50 of the second active material satisfy $0.2 \leq \frac{Db50}{Da50} \leq 0.8$.

By specifying a relative relationship between the particle sizes of the active materials in the two active material layers, the kinetic performance is further improved, and processability is facilitated when a coating amount of the second layer is small.

In any one of the embodiments of this application, the layer spacing $d_1$ corresponding to the d002 peak of the first active material is within a range of 0.335-0.3362 nm, and the layer spacing $d_2$ corresponding to the d002 peak of the second active material is within a range of 0.3356-0.38 nm.

In any one of the embodiments of this application, the volume median particle size Da50 of the first active material is within a range of 8-20 $\mu$m, and the volume median particle size Db50 of the second active material is within a range of 4-12 $\mu$m.

In any one of the embodiments of this application, the mass per unit area $CW_1$ of the first active material layer disposed on the negative electrode current collector is within a range of 80-200 g/m$^2$, and the mass per unit area $CW_2$ of the second active material layer disposed on the negative electrode current collector is within a range of 10-110 g/m$^2$.

In any one of the embodiments of this application, the first active material is a natural graphite or artificial graphite material, and/or the second active material is an artificial graphite material.

In any one of the embodiments, soft carbon or hard carbon is contained in the first active layer and/or the second active layer.

A second aspect of this application provides a secondary battery, where the secondary battery includes the negative electrode plate according to the first aspect of this application.

A third aspect of this application provides a battery module, where the battery module includes the secondary battery according to the second aspect of this application.

A fourth aspect of this application provides a battery pack, where the battery pack includes one of the secondary battery according to the second aspect of this application and the battery module according to the third aspect of this application.

A fifth aspect of this application provides an electric apparatus, where the electric apparatus includes at least one of the secondary battery according to the second aspect of this application, the battery module according to the third aspect of this application, and the battery pack according to the fourth aspect of this application.

The battery module, the battery pack, and the electric apparatus in this application include the secondary battery provided in this application, and therefore have at least the same advantages as the secondary battery.

**BRIEF DESCRIPTION OF DRAWINGS**

To describe the technical solutions in the embodiments of this application more clearly, the following briefly describes the accompanying drawings required in the embodiments of this application. Apparently, the accompanying drawings in the following description show merely some embodiments of this application, and a person of ordinary skill in the art may still derive other drawings from these accompanying drawings without creative efforts.

FIG. 1 is a schematic diagram of an embodiment of a negative electrode plate according to this application;
FIG. 2 is a schematic diagram of an embodiment of a secondary battery according to this application;
FIG. 3 is a schematic exploded view of an embodiment of a secondary battery according to this application;
FIG. 4 is a schematic diagram of an embodiment of a battery module according to this application;
FIG. 5 is a schematic diagram of an embodiment of a battery pack according to this application;
FIG. 6 is an exploded view of FIG. 5; and
FIG. 7 is a schematic diagram of an embodiment of an electric apparatus using a secondary battery as a power source according to this application.

The accompanying drawings are not necessarily drawn to scale. Reference signs in the accompanying drawings are described as follows:

1. battery pack;
2. upper box body;
3. lower box body;
4. battery module;
5. secondary battery;
51. housing;
52. electrode assembly; and
53. cover plate.

**DESCRIPTION OF EMBODIMENTS**

A negative electrode plate, a secondary battery, a battery module, a battery pack, and an electric apparatus in this application are described below in detail with reference to the accompanying drawings as appropriate. However, unnecessary detailed descriptions are omitted in some cases. For example, well-known matters are not described in detail and substantially identical structures are not repeatedly described. This is to prevent the following description from becoming unnecessarily long and to facilitate ease of understanding by a person skilled in the art. In addition, the accompanying drawings and the following description are provided to help a person skilled in the art fully understand this application, and are not intended to limit the subject matter described in the claims.

"Ranges" disclosed in this application are defined in a form of lower and upper limits, where given ranges are defined by selecting lower and upper limits and the selected lower and upper limits define boundaries of special ranges. Ranges defined in this method may or may not be inclusive of end values, and any combinations may be used, that is, any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise specified, a value range of "a-b" is a short representation of any combination of real numbers between a and b, where both a and b are real numbers. For example, a value range of "0-5" means that all real numbers within the range of "0-5" are listed herein, and "0-5" is just a short representation of a combination of these values. In addition, when a parameter is expressed as an integer greater than or equal to 2, this is equivalent to disclosure that the parameter is an integer such as 2, 3, 4, 5, 6, 7, 8, 9, 10, 11, or 12.

Unless otherwise specified, all the embodiments and optional embodiments of this application can be mutually combined to form new technical solutions.

Unless otherwise specified, all the technical features and optional technical features of this application can be mutually combined to form a new technical solution.

Unless otherwise specified, all the steps in this application can be performed sequentially or randomly, and preferably, performed sequentially. For example, a method includes steps (a) and (b), which indicates that the method may include steps (a) and (b) performed in sequence, or may include steps (b) and (a) performed in sequence. For example, that the method may further include step (c) indicates that step (c) may be added to the method in any order. For example, the method may include steps (a), (b), and (c), or steps (a), (c), and (b), or steps (c), (a), and (b), or the like.

Unless otherwise specified, "include" and "contain" mentioned in this application are inclusive or exclusive. For example, terms "include" and "contain" can mean that other unlisted components may also be included or contained, or only listed components may be included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

## Secondary battery

A secondary battery, also referred to as a rechargeable battery or a storage battery, is a battery whose active material can be activated for continuous use through charging after the battery is discharged.

Usually, the secondary battery includes a positive electrode plate, a negative electrode plate, a separator, and an electrolyte. During charging and discharging of the secondary battery, active ions (such as lithium ions) are intercalated and deintercalated back and forth between the positive electrode plate and the negative electrode plate. The separator is disposed between the positive electrode plate and the negative electrode plate to mainly prevent short circuit between the positive electrode and the negative electrode and to allow active ions to pass through. The electrolyte is between the positive electrode plate and the negative electrode plate to conduct the active ions.

[Negative electrode plate]

A negative electrode is one of most critical components of a lithium-ion battery. Design of the negative electrode directly affects performance of the battery, and especially charge-related characteristics of the battery. How a battery having both desirable energy density and kinetic performance can be obtained by optimizing the design of the negative electrode plate is currently a common challenge in the industry.

To resolve the foregoing problem, the inventor has performed plenty of research and provided a negative electrode plate. The negative electrode plate in this application uses two or more active material layers, and by adjusting a relationship between layer spacings and that between coating weights of the active material layers, the negative electrode plate can have both relatively high energy density and good charge-discharge kinetic performance.

The negative electrode plate in this application includes a negative electrode current collector and active material layers disposed on at least one surface of the negative electrode current collector, where the active material layers include a first active material layer and a second active material layer disposed on a surface of the first active material layer, the first active material layer includes a first active material, the second active material layer includes a second active material, and the active material layers satisfy $\alpha \times CW_2 \leq CW_1$, where

$$\alpha = \frac{d2}{d1}$$

$\alpha$ is a relative factor of layer spacings, where and $1 \leq \alpha \leq 1.12$;

$d_1$ is a layer spacing corresponding to a d002 peak of the first active material, in units of nm;

$d_2$ is a layer spacing corresponding to a d002 peak of the second active material, in units of nm;

$CW_1$ is mass per unit area of the first active material layer disposed on the negative electrode current collector, in units of $g/m^2$, and if the first active material layer and the second active material layer are disposed on both sides of the negative electrode current collector, the mass should be mass of the first active material layers on the two

sides; and
CW$_2$ is mass per unit area of the second active material layer disposed on the negative electrode current collector, in units of g/m$^2$, and if the first active material layer and the second active material layer are disposed on both sides of the negative electrode current collector, the mass should be mass of the second active material layers on the two sides.

Therefore, in this application, by using two or more active material layers in a negative electrode and adjusting a relationship between layer spacings and that between coating weights of the active material layers, it is possible to obtain a negative electrode of a battery with both higher energy density and better charge-discharge kinetic performance. More specifically, the inventors of this application have found that when two active material layers are applied on one side of the current collector of the negative electrode plate with the active material layer spacing of the second active material layer larger than the active material layer spacing of the first active material layer, during migration of lithium ions from a positive electrode to the negative electrode, because of the large spacing of the surface material layer, impedance to intercalation of lithium ions is low so that lithium ions can be quickly intercalated into the surface active material. Therefore, precipitation of lithium ions on the surface of the negative electrode plate due to an excessive charging rate is avoided. Because a larger spacing of the negative active material layer means a lower capacity of the material, a heavier coating weight of the second active material layer has greater impact on the overall extractable capacity of the negative electrode plate. Taking both the extractable capacity of the negative electrode plate and the charging window into account, this application defines the coating weight of the second active material layer. A larger active material layer spacing of the second active material layer represents a stronger charging capability and a lower capacity, and correspondingly, just a small coating weight is enough to achieve a good charging level. When the active material layer spacing of the second active material layer is smaller, its charging capability becomes weaker, and the capacity is higher. In this case, in order that the electrode plate has relatively good charge performance on the whole, a proportion of the coating weight of the second active material layer to a total coating weight of the electrode plate should be increased. The inventors of this application have unexpectedly found that, with a structure with two active material layers used, the first active material layer having a small active material layer spacing and a high capacity makes the electrode plate and the battery have relatively high energy density; and the second active material layer having a large active material layer spacing allows a lower impedance to lithium intercalation on the surface of the negative electrode, avoiding deposition of lithium ions on the surface of the negative electrode plate during high-rate charging, and increasing the battery charging window. Therefore, the negative electrode of the battery whose active material layers satisfy the foregoing relationships has both desirable energy density and charge-discharge kinetic performance.

In some embodiments, the active material layers satisfy
$$CW_2 \geq \frac{3}{17}\alpha \times CW_1 .$$

The weight of the second active material layer is adjusted based on the layer spacing and the weight of the first active material layer. On the whole, to enable the negative electrode plate to have both high energy density and good kinetic performance, the coating weight of the second active material layer should satisfy
$$CW_2 \geq \frac{3}{17}\alpha \times CW_1 .$$

The inventors of this application have found that, when the coating weight of the active material layer on the negative electrode plate is smaller and the active material layer spacing is larger, internal resistance of the electrode plate and the battery is lower, and charge-discharge performance is better, but a smaller weight and larger spacing of the active material layer causes energy density of the battery to decrease under the same battery capacity due to the use of more auxiliary materials such as foil and more materials. To take both the energy density and charge performance of the battery into account, avoiding overdesign of one performance causing inadaquete design of the other, the inventors further define the relationship between coating weights and that between layer spacings of the first active material layer and the second active material layer based on an actual test results. When these relationships are satisfied, both rate performance and energy density of the negative electrode plate and the battery can be improved properly.

In some embodiments, $\dfrac{CW_1}{CW_2}$ is inversely proportional to $\dfrac{d_1 \times Da50}{d_2 \times Db50}$, and $0.2 \leq \dfrac{CW_2}{CW_2 + CW_1} \leq 0.45$, where

Da50 is a volume median particle size of the first active material, in units of $\mu$m; and
Db50 is a volume median particle size of the second active material, in units of $\mu$m.

Based on the layer spacing and particle size of each of the active material layers, when the coating weights of the active material layers and the active material particle sizes of the active material layers are adjusted to satisfy that

$\dfrac{CW1}{CW2}$ is inversely proportional to $\dfrac{d1 \times Da30}{d2 \times Db50}$ and that $0.2 \leq \dfrac{CW2}{CW2+CW1} \leq 0.45$ , the electrode plate and the battery has both good fast charge performance and high energy density.

In some embodiments, the volume median particle size Da50 of the first active material and the volume median particle size Db50 of the second active material satisfy $0.2 \leq \dfrac{Db50}{Da50} \leq 0.8$ .

By specifying a relative relationship between the particle sizes of the active materials in the two active material layers, the kinetic performance is further improved, and processability is facilitated when a coating amount of the second layer is small.

In some embodiments, the layer spacing $d_l$ corresponding to the d002 peak of the first active material is within a range of 0.335-0.3362 nm, and the layer spacing $d_2$ corresponding to the d002 peak of the second active material is within a range of 0.3356-0.38 nm.

In some embodiments, the volume median particle size Da50 of the first active material is within a range of 8-20 $\mu$m, and the volume median particle size Db50 of the second active material is within a range of 4-12 $\mu$m.

In some embodiments, the mass per unit area $CW_1$ of the first active material layer disposed on the negative electrode current collector is within a range of 80-200 g/m$^2$, and the mass per unit area $CW_2$ of the second active material layer disposed on the negative electrode current collector is within a range of 10-110 g/m$^2$.

In this application, the volume median particle size D50 of materials has a meaning known in the art, and can be measured by using a method and an instrument known in the art. For example, it may be measured by using a laser particle size analyzer (for example, Mastersizer 2000E made by Malvern Panalytical in the UK) in accordance with GB/T 19077-2016 Particle Size Analysis-Laser Diffraction Methods.

In some embodiments, the negative electrode plate further includes a conductive agent and a binder. Types and contents of the agents are not specifically limited and may be selected based on an actual requirement. For example, the conductive agent is one or more of superconducting carbon, carbon black (for example, acetylene black or Ketjen black), carbon dots, carbon nanotube, graphene, and carbon nanofiber. The binder may include one or more of styrene-butadiene rubber (SBR), water soluble unsaturated resin SR-1B, waterborne acrylic resin (for example, polyacrylic acid PAA, polymethylacrylic acid PMAA, and sodium polyacrylate PAAS), polyacrylamide (PAM), polyvinyl alcohol (PVA), sodium alginate (SA), and carboxymethyl chitosan (CMCS). Types of other optional additives may be the same or different. For example, the other optional additives may include a thickener (for example, sodium carboxymethyl cellulose CMC-Na) and a PTC thermistor material.

In the negative electrode plate in this application, the negative electrode current collector may use a metal foil or a composite current collector. As an example of the metal foil, a copper foil may be used. The composite current collector may include a polymer material matrix and a metal material layer formed on at least one surface of the polymer material matrix. For example, a metal material may be selected from one or more of copper, copper alloy, nickel, nickel alloy, titanium, titanium alloy, silver, and silver alloy. For example, the polymer material matrix may be selected from polypropylene (PP), polyethylene terephthalate (PET), polybutylene terephthalate (PBT), polystyrene (PS), or polyethylene (PE).

In some embodiments, the active material layer is disposed on at least one surface of the negative electrode current collector. For example, the negative electrode current collector has two opposite surfaces in its thickness direction, and the active material layer is disposed on either or both of the two opposite surfaces of the negative electrode current collector.

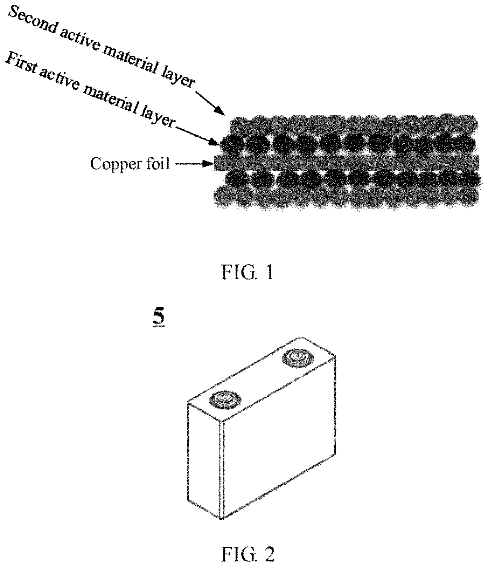

FIG. 1 shows a negative electrode current collector with active material layers on its surface, where two surfaces of the negative electrode current collector shown in FIG. 1 both have a first active material layer and a second active material layer.

Certainly, a negative electrode plate 10 in this application may also have other embodiments. For example, the negative electrode plate 10 includes a negative electrode current collector 11, a first active material layer 121 disposed on one side of the negative electrode current collector, and a second active material layer 122 disposed on the first active material layer 121.

In addition, the negative electrode plate in this application does not exclude additional functional layers other than the negative electrode film layer. For example, in some embodiments, the negative electrode plate in this application may further include a conductive primer layer (which is, for example, formed by a conductive agent and a binder) disposed between the negative electrode current collector and the second negative electrode film layer. In some other embodiments, the negative electrode plate in this application further includes a protection layer covering a surface of the first negative electrode film layer.

In some embodiments, a preparation method of the negative electrode plate of this application may include the following steps:

1. Prepare a slurry A containing a first active material and a slurry B containing a second active material separately.
2. Calulate $CW_1$ and $CW_2$ based on a layer spacing of the first active material and a layer spacing of the second active material.
3. Apply the slurry A on a current collector and dry it to obtain an electrode plate A coated with a first active material layer.
4. Apply the slurry B on the surface of the electrode plate A and dry it, and then perform cold-pressed and slitting to obtain the negative electrode plate described in this application.

Coating amounts of the first active material layer and a second active material layer respectively satisfy $CW_1$ and $CW_2$.

In some embodiments, the slurry A includes the first active material and one or more of a conductive agent, a binder, and a thickener.

In some embodiments, the slurry B includes the second active material and one or more of a conductive agent, a binder, and a thickener.

For a specific method for preparing a negative electrode, reference may be made to a specific embodiment provided in this application. Details are not described herein.

[Positive electrode plate]

The secondary battery includes a positive electrode plate. The positive electrode plate usually includes a positive electrode current collector and a positive electrode film layer disposed on at least one surface of the positive electrode current collector and including a positive electrode active material. For example, the positive electrode current collector has two opposite surfaces in its thickness direction, and the positive electrode film layer is disposed on either or both of the two opposite surfaces of the positive electrode current collector.

In the positive electrode plate in this application, the positive electrode current collector may use a metal foil or a composite current collector. As an example of the metal foil, an aluminum foil may be used as the positive electrode current collector. The composite current collector may include a polymer material matrix and a metal material layer formed on at least one surface of the polymer material matrix. For example, a metal material may be selected from one or more of aluminum, aluminum alloy, nickel, nickel alloy, titanium, titanium alloy, silver, and silver alloy. For example, the polymer material matrix may be selected from polypropylene (PP), polyethylene terephthalate (PET), polybutylene terephthalate (PBT), polystyrene (PS), or polyethylene (PE).

In the positive electrode plate in this application, the positive electrode film layer includes a positive electrode active material, and the positive electrode active material may be a known positive electrode active material for secondary batteries in the art. For example, the positive electrode active material may include one or more of lithium transition metal oxide, olivine-structured lithium-containing phosphate, and respective modified compounds thereof. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their modified compounds. Examples of the olivine-structured lithium-containing phosphate may include but are not limited to one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and their respective modified compounds. This application is not limited to these materials, and other conventionally well-known materials that can be used as a positive electrode active material for secondary batteries may also be used. One of these positive electrode active materials may be used alone, or two or more of them may be used in combination.

In the positive electrode plate in this application, the modified compounds of the positive electrode active materials may be obtained by making a doping modification, a surface coating modification, or both a doping modification and a surface coating modification to the positive electrode active materials.

In the positive electrode plate in this application, the positive electrode film layer usually includes the positive electrode active material and optionally, a binder, and optionally, a conductive agent. The positive electrode film layer is usually formed by applying a positive electrode slurry onto the positive electrode current collector, followed by drying and cold-pressing. The positive electrode slurry is usually formed by dispersing the positive electrode active material and optionally, the conductive agent, and optionally, the binder and any other component in a solvent and stirring them evenly. The solvent may be but is not limited to N-methylpyrrolidone (NMP). For example, the binder for the positive electrode film layer may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. For example, the conductive agent for the positive electrode film layer may include one or more of superconducting carbon, acetylene black, carbon black, Ketjen black, carbon dots, carbon nanotubes, graphene, and carbon nanofiber. It should be noted that the composition or parameters of the positive electrode film layer described in this application are all the composition or parameter ranges of a single-side film layer of the positive electrode current collector. When the positive electrode film layer is disposed on two opposite surfaces of the positive electrode current collector, the composition or parameters of the positive electrode film layer on any one of the surfaces satisfies this application, that is, being considered to fall within the protection scope of this application.

[Electrolyte]

An electrolyte conducts active ions between the positive electrode plate and the negative electrode plate. For the secondary battery in this application, there is no specific limitation on a type of the electrolyte, and the electrolyte may be selected based on a requirement. For example, the electrolyte may be selected from at least one of a solid electrolyte and a liquid electrolyte (that is, a liquid electrolyte).

In some embodiments, the electrolyte is a liquid electrolyte. The electrolyte includes an electrolyte salt and a solvent.

In some embodiments, a type of the electrolyte salt is not specifically limited, and may be selected based on an actual requirement. For example, the electrolyte salt may be selected from one or more of $LiPF_6$ (lithium hexafluorophosphate), $LiBF_4$ (lithium tetrafluoroborate), $LiClO_4$ (lithium perchlorate), $LiAsF_6$ (lithium hexafluoroarsenate), LiFSI (lithium bis(fluorosulfonyl)imide), LiTFSI (lithium bistrifluoromethanesulfonimide), LiTFS (lithium trifluoromethanesulfonate), LiDFOB (lithium difluoro(oxalato)borate), LiBOB (lithium dioxalate borate), $LiPO_2F_2$ (lithium difluorophosphate), LiDFOP (lithium difluoro(dioxalato)phosphate), and LiTFOP (lithium tetrafluoro oxalato phosphate). In some embodiments, a type of the solvent is not specifically limited, and may be selected based on an actual requirement. For example, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), methyl ethyl sulfone (EMS), and diethyl sulfone (ESE).

In some embodiments, optionally, the solvent is a non-aqueous solvent.

In some embodiments, optionally, the electrolyte further includes an additive. For example, the additive may include a negative electrode film-forming additive, or may include a positive electrode film-forming additive, or may include an additive capable of improving some performance of the battery, for example, an additive for improving overcharge performance of the battery, an additive for improving high-temperature performance of the battery, or an additive for improving low-temperature performance of the battery.

[Separator]

A secondary battery using a liquid electrolyte and some secondary batteries using solid electrolytes further include a separator. The separator is disposed between the positive electrode plate and the negative electrode plate to provide separation. The separator is not limited to any specific type in this application, and may be any commonly known porous separator with good chemical stability and mechanical stability. In some embodiments, a material of the separator may be selected from one or more of a glass fiber, non-woven, polyethylene, polypropylene polyethylene, and poly(vinylidene difluoride). The separator may be a single-layer thin film or a multilayer composite thin film. When the separator is a multilayer composite thin film, each layer may be made of the same or different materials.

In some embodiments, the positive electrode plate, the negative electrode plate, and the separator may be made into an electrode assembly through a winding process or a lamination process.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft package, for example, a soft bag. A material of the soft package may be plastic, for example, one or more of polypropylene (PP), polybutylene terephthalate (PBT), polybutylene succinate (PBS), and the like.

This application does not impose special limitations on a shape of the secondary battery, and the secondary battery may be cylindrical, rectangular, or of any other shape. FIG. 2 shows a secondary battery 5 with a rectangular structure as an example.

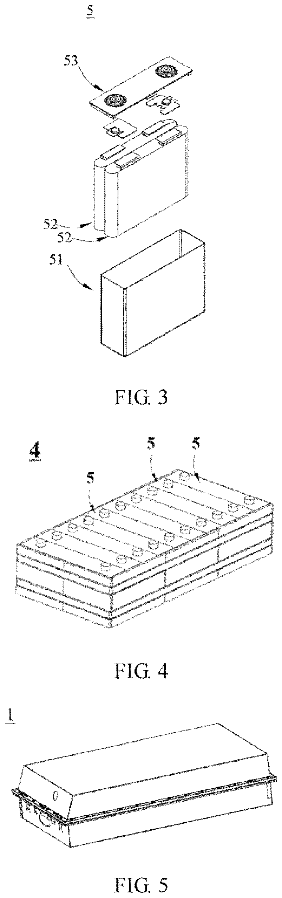

In some embodiments, referring to FIG. 3, the outer package may include a housing 51 and a cover plate 53. The housing 51 may include a base plate and a side plate connected onto the base plate, and the base plate and the side plate enclose an accommodating cavity. The housing 51 has an opening connected to the accommodating cavity, and the cover plate 53 is configured to cover the opening to seal the accommodating cavity. A positive electrode plate, a negative electrode plate, and a separator may be made into an electrode assembly 52 through a winding process or a lamination process. The electrode assembly 52 is packaged in the accommodating cavity. The electrolyte infiltrates into the electrode assembly 52. There may be one or more electrode assemblies 52 in the secondary battery 5, and the quantity may be adjusted based on a requirement.

In some embodiments, the secondary battery may be assembled into a battery module. The battery module may include a plurality of secondary batteries and a specific quantity may be adjusted based on application and capacity of the battery module.

FIG. 4 shows a battery module 4 as an example. Referring to FIG. 4, in the battery module 4, a plurality of secondary batteries 5 may be sequentially arranged in a length direction of the battery module 4. Certainly, the secondary batteries may alternatively be arranged in any other manner. Further, the plurality of secondary batteries 5 may be fastened using fasteners.

Optionally, the battery module 4 may further include a housing with an accommodating space, and the plurality of secondary batteries 5 are accommodated in the accommodating space.

In some embodiments, the battery module may be further assembled into a battery pack, and a quantity of battery modules included in the battery pack may be adjusted based on application and capacity of the battery pack.

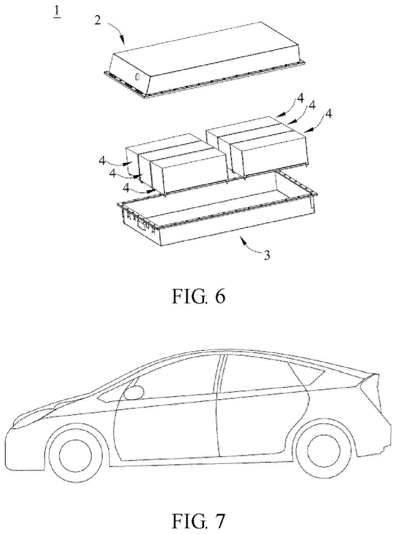

FIG. 5 and FIG. 6 show a battery pack 1 as an example. Referring to FIG. 5 and FIG. 6, the battery pack 1 may include a battery box and a plurality of battery modules 4 disposed in the battery box. The battery box includes an upper box body 2 and a lower box body 3. The upper box body 2 is configured to cover the lower box body 3 to form an enclosed space for accommodating the battery modules 4. The plurality of battery modules 4 may be arranged in the battery box in any manner.

Electric apparatus

An embodiment of this application further provides an electric apparatus. The electric apparatus includes at least one of the secondary battery, the battery module, and the battery pack provided in this application. The secondary battery, the battery module, or the battery pack may be used as a power source for the electric apparatus, or an energy storage unit of the electric apparatus. The electric apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

The secondary battery, the battery module, or the battery pack may be selected for the electric apparatus based on requirements for using the apparatus.

FIG. 7 shows an electric apparatus as an example. The electric apparatus is a full electric vehicle, a hybrid electric vehicle, a plug-in hybrid electric vehicle, or the like. To satisfy a requirement of the electric apparatus for high power and high energy density, a battery pack or a battery module may be used.

In another example, the electric apparatus may be a mobile phone, a tablet computer, a notebook computer, or the like. The electric apparatus is usually required to be light and thin, and the secondary battery may be used as a power source.

**Examples**

Examples below more specifically describe the content disclosed in this application, and these examples are merely used for explanatory description. Unless otherwise stated, all parts, percentages, and ratios reported in the following examples are based on weight, all reagents used in the examples, the first active material, and the second active material are commercially available or synthesized in a conventional manner. All instruments used in the examples are commercially available.

**Examples 1 to 9**

Lithium-ion batteries including the negative electrode plate in this application in Examples 1 to 9 were prepared according to the following method.

Preparation of negative electrode plate

1. According to Table 1, a first active material of a first active material layer, a conductive agent Super-P, a binder SBR, and a thickener CMC were mixed at a mass ratio of 96:1:2:1, and then fully stirred and evenly mixed in a deionized aqueous solvent system, to obtain a slurry A.

2. According to Table 1, a second active material of a second active material layer, a conductive agent Super-P, a binder SBR, and a thickener CMC were mixed at a mass ratio of 96:1:2:1, and then fully stirred and evenly mixed in a deionized aqueous solvent system, to obtain a slurry B.

3. According to Table 1, a Cu foil was coated with the slurry A and dried, to obtain an electrode plate A coated with the first active material layer.

4. According to Table 1, a surface of the electrode plate A was coated with the slurry B and dried, and then the electrode plate A was cold-pressed and slit, to obtain a negative electrode plate having two active material layers.

Coating amounts of the first active material layer and the second active material layer respectively satisfied $CW_1$ and $CW_2$.

Preparation of positive electrode plate

A positive electrode active material $LiFePO_4$, a conductive agent acetylene black, and a binder polyvinylidene fluoride (PVDF) were mixed at a mass ratio of 96:2:2. A solvent N-methylpyrrolidone (NMP) was added. Then the resulting mixture was stirred evenly by a vacuum mixer to obtain a positive electrode slurry. The positive electrode slurry was evenly applied on an aluminum foil of the positive electrode current collector. The aluminum foil was dried at room temperature and then continued to be dried in an oven. Then cold-pressing and slitting were performed to obtain a positive electrode plate.

Preparation of electrolyte

Ethylene carbonate (EC), ethyl methyl carbonate (EMC), and diethyl carbonate (DEC) were mixed at a volume ratio of 1:1:1 to obtain an organic solvent, and then a fully dried lithium salt $LiPF_6$ was evenly dissolved in the organic solvent to obtain an electrolyte whose concentration was 1 mol/L.

Preparation of separator

A polyethylene film was used as a separator.

Preparation of secondary battery

The positive electrode plate, the separator, and the negative electrode plate were sequentially stacked so that the separator was located between the positive electrode plate and the negative electrode plate to provide separation. Then the resulting stack was wound to obtain an electrode assembly. The electrode assembly was placed into an outer package and dried. Then an electrolyte was injected, and processes such as vacuum packaging, standing, formation, and shaping were performed to obtain a secondary battery.

**Comparative Examples 1 to 3**

A method for preparing secondary batteries of Comparative Examples 1 to 3 is the same as that of Examples 1 to 13, except for a process of preparing the negative electrode plate. Details are given in Table 1.

**Tests**

Energy density: At 25°C, the lithium-ion battery was charged to 4.2V with a constant current of 1C, then charged with a constant voltage of 4.2V until the current was less than 0.05C, and then discharged to 2.8V at 0.1C to obtain discharge energy Q. Mass of the battery was measured as M. Energy density=Q/M.

Charge time: The charge time desribed in this application is a time for constant charging at 25°C to 85% SOC using a lithium precipitation window rate.

## Table 1 Data table of examples and comparative examples

| No. | First active material | CW₁ g/m² | Interlayer Distance nm | Da50 μm | Second active material | CW₂ g/m² | D2 nm | Db50 μm | α | α×CW₂ | α×CW₂≤CW₁? | 3/17α×CW₁ | CW₂≥3/17α×CW₁? | CW₂/(CW₂+CW₁) | Db50/Da50 | Energy density Wh/kg | Charge time min |
|---|---|---|---|---|---|---|---|---|---|---|---|---|---|---|---|---|---|
| Example 1 | Artificial graphite | 176 | 0.3358 | 18 | Soft carbon | 44 | 0.3700 | 8 | 1.102 | 48.481 | Yes | 34 | Yes | 0.2 | 0.44 | 185 | 45 |
| Comparative Example 1 | Artificial graphite | 176 | 0.3358 | 18 | Hard carbon | 44 | 0.3805 | 8 | 1.133 | 49.857 | Yes | 35 | Yes | 0.2 | 0.44 | 165 | 43 |
| Comparative Example 2 | Artificial graphite | 88 | 0.3362 | 18 | Artificial graphite | 132 | 0.3358 | 8 | 0.999 | 131.843 | No | 16 | Yes | 0.6 | 0.44 | 187 | 82 |
| Comparative Example 3 | Artificial graphite | 220 | 0.3358 | 18 | Artificial graphite | / | / | / | One layer | / | / | / | / | / | / | 185 | 90 |
| | | | | | | | | | | | | | | | | | |
| Example 1 | Artificial graphite | 176 | 0.3358 | 18 | Soft carbon | 44 | 0.3700 | 8 | 1.102 | 48.481 | Yes | 34 | Yes | 0.2 | 0.44 | 185 | 45 |
| Example 2 | Artificial graphite | 154 | 0.3358 | 18 | Soft carbon | 66 | 0.3700 | 8 | 1.102 | 72.722 | Yes | 30 | Yes | 0.3 | 0.44 | 182 | 45 |

| No. | First active material | CW$_1$ g/m$^2$ | Interlayer Distance nm | Da50 μm | Second active material | CW$_2$ g/m$^2$ | D2 nm | Db50 μm | α | α×CW$_2$ | α×CW$_2$≤CW$_1$? | 3/17α×CW$_1$ | CW$_2$≥3/17α×CW$_1$? | CW$_2$/(CW$_2$+CW$_1$) | Db50/Da50 | Energy density Wh/kg | Charge time min |
|---|---|---|---|---|---|---|---|---|---|---|---|---|---|---|---|---|---|
| | | | | | Negative electrode active material layer | | | | | | | | | | | | |
| Example 3 | Artificial graphite | 110 | 0.3358 | 18 | Soft carbon | 90 | 0.3700 | 8 | 1.102 | 99.166 | Yes | 21 | Yes | 0.45 | 0.44 | 180 | 43 |
| Example 4 | Artificial graphite | 176 | 0.3358 | 18 | Soft carbon | 35 | 0.3700 | 8 | 1.102 | 38.565 | Yes | 34 | Yes | 0.17 | 0.44 | 180 | 47 |
| Example 5 | Artificial graphite | 80 | 0.3358 | 18 | Soft carbon | 70 | 0.3700 | 8 | 1.102 | 77.129 | Yes | 16 | Yes | 0.47 | 0.44 | 176 | 40 |
| Example 1 | Artificial graphite | 176 | 0.3358 | 18 | Soft carbon | 44 | 0.3700 | 8 | 1.102 | 48.481 | Yes | 34 | Yes | 0.2 | 0.44 | 185 | 45 |
| Example 6 | Artificial graphite | 176 | 0.3358 | 20 | Soft carbon | 44 | 0.3700 | 4 | 1.102 | 48.481 | Yes | 34 | Yes | 0.2 | 0.20 | 184 | 42 |
| Example 7 | Artificial graphite | 176 | 0.3358 | 15 | Soft carbon | 44 | 0.3700 | 12 | 1.102 | 48.481 | Yes | 34 | Yes | 0.2 | 0.80 | 185 | 51 |
| Example 8 | Artificial graphite | 176 | 0.3358 | 22 | Soft carbon | 44 | 0.3700 | 4 | 1.102 | 48.481 | Yes | 34 | Yes | 0.2 | 0.18 | 181 | 46 |
| Example 9 | Artificial graphite | 176 | 0.3358 | 12 | Soft carbon | 44 | 0.3700 | 12 | 1.102 | 48.481 | Yes | 34 | Yes | 0.2 | 1.00 | 185 | 50 |

14

In this application, by using two or more active material layers in a negative electrode and adjusting a relationship between layer spacings and that between coating weights of the active material layers, it is possible to obtain a negative electrode of a battery with both higher energy density and better charge-discharge kinetic performance.

According to Table 1, from the comparison between Examples 1 to 9 and Comparative Examples 1 to 3, it can be seen that the secondary batteries obtained by using two active material layers in the negative electrode and adjusting the relationship between layer spacings and that between coating weights of the active material layers have both higher energy density and better charge-discharge kinetic performance. In short, the negative electrode materials prepared by using the method of the present invention all satisfy that the charge time is less than or equal to 75 minutes and that 0.3C energy density is greater than or equal to 170 Wh/kg.

Comparative Examples 1 to 3 do not conform to the relationship between layer spacings and that between coating weights of active material layers as defined in this application. Specifically, in comparison between Comparative Example 1 and Example 1 of this application, the second active material in Comparative Example 1 uses hard carbon with a larger layer spacing, and its capacity density is much lower than that in Example 1 of this application. In other words, when the active material layer spacing of the second active material layer is larger, a charging capability is stronger, but the capacity is lower, and obviously, energy density and charge-discharge kinetic performance cannot be both guaranteed. In comparison with Example 1, in Comparative Example 2, the relative factor $\alpha$ of layer spacings is not within the range defined in this application ($1 \leq \alpha \leq 1.12$), and therefore energy density and charge-discharge kinetic performance cannot be both guaranteed. In comparison with Example 1, Comparative Example 3 has a single layer of coating, showing that given a same coating amount, a single layer of coating is unable to guarantee both energy density and charge-discharge kinetic performance.

Further, in comparison with Examples 1 to 3, $CW_2/(CW_2+CW_1)$ in Example 5 is beyond the range defined in this application, and as a result, energy density cannot be guaranteed although charge-discharge kinetic performance is good; whereas, $CW_2/(CW_2+CW_1)$ in Example 4 is beyond the range defined in this application, and as a result, charge-discharge kinetic performance cannot although energy density is good.

Further, in comparison with Example 1, Example 6, and Example 7, Db50/Da50 in Example 8 and that in Example 9 are beyond the ranged defined in this application, and as a result, energy density and charge-discharge kinetic performance cannot be both guaranteed.

## Claims

1. A negative electrode plate, comprising a negative electrode current collector and active material layers disposed on at least one surface of the negative electrode current collector, wherein the active material layers comprise a first active material layer and a second active material layer disposed on a surface of the first active material layer, wherein the first active material layer is arranged between the negative electrode current collector and the second active material layer, the first active material layer comprises a first active material, the second active material layer comprises a second active material, and the active material layers satisfy $\alpha \times CW_2 \leq CW_1$, wherein

$$\alpha = \frac{d2}{d1}$$

   $\alpha$ is a relative factor of layer spacings, wherein and $1 \leq \alpha \leq 1.12$;
   $d_1$ is a layer spacing corresponding to a d002 peak of the first active material, in units of nm;
   $d_2$ is a layer spacing corresponding to a d002 peak of the second active material, in units of nm;
   $CW_1$ is mass per unit area of the first active material layer disposed on the negative electrode current collector, in units of $g/m^2$; and
   $CW_2$ is mass per unit area of the second active material layer disposed on the negative electrode current collector, in units of $g/m^2$, wherein
   the layer spacing d1 corresponding to the d002 peak of the first active material is within a range of 0.335-0.3362 nm, and the layer spacing d2 corresponding to the d002 peak of the second active material is within a range of 0.3356-0.38 nm, and
   wherein the mass per unit area CW1 of the first active material layer disposed on the negative electrode current collector is within a range of 80-200 g/m2, and the mass per unit area CW2 of the second active material layer disposed on the negative electrode current collector is within a range of 10-110 g/m2, wherein
   the first active material is a natural graphite material or an artificial graphite material.

2. The negative electrode plate according to claim 1, wherein the active material layers satisfy

$$CW_2 \geq \frac{3}{17} \, \alpha \times CW_1.$$

3. The negative electrode plate according to claim 1, wherein the volume median particle size Da50, measured according to the description, of the first active material and the volume median particle size Db50, measured according

$$\frac{Db50}{Da50} \leq 0.8$$

to the description, of the second active material satisfy $0.2 \leq$ .

4. The negative electrode plate according to claim 2 or 3, wherein the volume median particle size Da50, measured according to the description, of the first active material is within a range of 8-20 $\mu$m, and the volume median particle size Db50, measured according to the description, of the second active material is within a range of 4-12 $\mu$m.

5. The negative electrode plate according to any one of claims 1 to 4, wherein
soft carbon or hard carbon is contained in the first active layer and/or the second active layer.

6. A secondary battery (5), wherein the secondary battery (5) comprises the negative electrode plate according to any one of claims 1 to 5.

7. A battery module (4) comprising the secondary battery (5) according to claim 6.

8. A battery pack (1) comprising the secondary battery (5) according to claim 6 or the battery module (4) according to claim 7.

9. An electric apparatus comprising at least one of the secondary battery (5) according to claim 6, the battery module (4) according to claim 7, and the battery pack (1) according to claim 8.

**Patentansprüche**

1. Negative Elektrodenplatte, umfassend einen Stromkollektor der negativen Elektrode und Aktivmaterialschichten, die auf zumindest einer Fläche des Stromkollektors der negativen Elektrode angeordnet sind, wobei die Aktivmaterialschichten eine erste Aktivmaterialschicht und eine zweite Aktivmaterialschicht, die auf einer Fläche der ersten Aktivmaterialschicht angeordnet ist, aufweisen, wobei die erste Aktivmaterialschicht zwischen dem Stromkollektor der negativen Elektrode und der zweiten Aktivmaterialschicht angeordnet ist, wobei die erste Aktivmaterialschicht ein erstes Aktivmaterial umfasst, die zweite Aktivmaterialschicht ein zweites Aktivmaterial umfasst und die Aktivmaterialschichten $\alpha \times CW_2 \leq CW_1$ erfüllen, wobei

$$\alpha = \frac{d2}{d1}$$

$\alpha$ ein relativer Faktor von Schichtabständen ist, wobei und $1 \leq \alpha \leq 1{,}12$;
$d_1$ ein Schichtabstand entsprechend einer d002-Spitze des ersten Aktivmaterials in Einheiten von nm ist;
$d_2$ ein Schichtabstand entsprechend einer d002-Spitze des zweiten Aktivmaterials in Einheiten von nm ist;
$CW_1$ die Masse pro Flächeneinheit der ersten Aktivmaterialschicht ist, die auf dem Stromkollektor der negativen Elektrode angeordnet ist, in Einheiten von g/m$^2$; und
$CW_2$ die Masse pro Flächeneinheit der zweiten Aktivmaterialschicht ist, die auf dem Stromkollektor der negativen Elektrode angeordnet ist, in Einheiten von g/m$^2$, wobei
der Schichtabstand d1 entsprechend der d002-Spitze des ersten Aktivmaterials in einem Bereich von 0,335-0,3362 nm liegt und der Schichtabstand d2 entsprechend der d002-Spitze des zweiten Aktivmaterials in einem Bereich von 0,3356-0,38 nm liegt, und
wobei die Masse pro Flächeneinheit $CW_1$ der ersten Aktivmaterialschicht, die auf dem Stromkollektor der negativen Elektrode angeordnet ist, in einem Bereich von 80-200 g/m$^2$ liegt, und die Masse pro Flächeneinheit $CW_2$ der zweiten Aktivmaterialschicht, die auf dem Stromkollektor der negativen Elektrode angeordnet ist, in einem Bereich von 10-110 g/m$^2$ liegt, wobei
das erste Aktivmaterial ein natürliches Graphitmaterial oder ein künstliches Graphitmaterial ist.

**2.** Negative Elektrodenplatte nach Anspruch 1, wobei die Aktivmaterialschichten $CW_2 \geq \frac{3}{17}\alpha \text{ x } CW_1$ erfüllen.

**3.** Negative Elektrodenplatte nach Anspruch 1, wobei die volumenbezogene mittlere Teilchengröße Da50, gemessen gemäß der Beschreibung, des ersten Aktivmaterials und die volumenbezogene mittlere Teilchengröße Db50, gemessen gemäß der Beschreibung, des zweiten Aktivmaterials $0,2 \leq \frac{Db50}{Da50} \leq 0,8$ erfüllen.

**4.** Negative Elektrodenplatte nach Anspruch 2 oder 3, wobei die volumenbezogene mittlere Teilchengröße Da50, gemessen gemäß der Beschreibung, des ersten Aktivmaterials in einem Bereich von 8-20 μm liegt, und die volumenbezogene mittlere Teilchengröße Db50, gemessen gemäß der Beschreibung, des zweiten Aktivmaterials in einem Bereich von 4-12 μm liegt.

**5.** Negative Elektrodenplatte nach einem der Ansprüche 1 bis 4, wobei weicher Kohlenstoff oder harter Kohlenestoff in der ersten aktiven Schicht und/oder der zweiten aktiven Schicht enthalten ist.

**6.** Sekundärbatterie (5), wobei die Sekundärbatterie (5) die negative Elektrodenplatte nach einem der Ansprüche 1 bis 5 aufweist.

**7.** Batteriemodul (4), aufweisend die Sekundärbatterie (5) nach Anspruch 6.

**8.** Batteriepack (1), aufweisend die Sekundärbatterie (5) nach Anspruch 6 oder das Batteriemodul (4) nach Anspruch 7.

**9.** Elektrische Vorrichtung, aufweisend die Sekundärbatterie (5) nach Anspruch 6 und/oder das Batteriemodul (4) nach Anspruch 7 und/oder den Batteriepack (1) nach Anspruch 8.

## Revendications

**1.** Feuille d'électrode négative, comprenant un collecteur de courant d'électrode négative et des couches de matériau actif disposées sur au moins une surface du collecteur de courant d'électrode négative, dans laquelle les couches de matériau actif comprennent une première couche de matériau actif et une seconde couche de matériau actif disposées sur une surface de la première couche de matériau actif, dans laquelle la première couche de matériau actif est agencée entre le collecteur de courant d'électrode négative et la seconde couche de matériau actif, la première couche de matériau actif comprend un premier matériau actif, la seconde couche de matériau actif comprend un second matériau actif, et les couches de matériau actif satisfont $\alpha \times CW_2 \leq CW_1$, dans laquelle

α est un facteur relatif d'espacements intercouche, dans laquelle α = d2/d1 et 1 ≤ α ≤ 1,12 ;
$d_1$ est un espacement intercouche correspondant à un pic d002 du premier matériau actif, en unités de nm ;
$d_2$ est un espacement intercouche correspondant à un pic d002 du second matériau actif, en unités de nm ;
$CW_1$ est une masse par zone unitaire de la première couche de matériau actif disposée sur le collecteur de courant d'électrode négative, en unités de g/m$^2$ ; et
$CW_2$ est une masse par zone unitaire de la seconde couche de matériau actif disposée sur le collecteur de courant d'électrode négative, en unités de g/m$^2$, dans laquelle
l'espacement intercouche d1 correspondant au pic d002 du premier matériau actif est dans la plage de 0,335-0,3362 nm, et l'espacement intercouche d2 correspondant au pic d002 du second matériau actif est dans la plage de 0,3356-0,38 nm, et
dans laquelle la masse par zone unitaire CW1 de la première couche de matériau actif disposée sur le collecteur de courant d'électrode négative est dans la plage de 80-200 g/m2, et la masse par zone unitaire CW2 de la seconde couche de matériau actif disposée sur le collecteur de courant d'électrode négative est dans la plage de 10-110 g/m2, dans laquelle
le premier matériau actif est un matériau de graphite naturel ou un matériau de graphite artificiel.

**2.** Feuille d'électrode négative selon la revendication 1, dans laquelle les couches de matériau actif satisfont CW2 ≥

$3/17 \; \alpha \times CW_1$.

**3.** Feuille d'électrode négative selon la revendication 1, dans laquelle la taille de particule médiane en volume Da50, mesurée selon la description, du premier matériau actif et la taille de particule médiane en volume Db50, mesurée selon la description, du second matériau actif satisfont $0{,}2 \le Db50/Da50 \le 0{,}8$.

**4.** Feuille d'électrode négative selon la revendication 2 ou 3, dans laquelle la taille de particule médiane en volume Da50, mesurée selon la description, du premier matériau actif est dans la plage de 8-20 $\mu$m, et la taille de particule médiane en volume Db50, mesurée selon la description, du second matériau actif est dans la plage de 4-12 $\mu$m.

**5.** Feuille d'électrode négative selon l'une quelconque des revendications 1 à 4, dans laquelle du carbone mou ou carbone dur est contenu dans la première couche active et/ou la seconde couche active.

**6.** Batterie secondaire (5), dans laquelle la batterie secondaire (5) comprend la feuille d'électrode négative selon l'une quelconque des revendications 1 à 5.

**7.** Module de batterie (4) comprenant la batterie secondaire (5) selon la revendication 6.

**8.** Bloc-batterie (1) comprenant la batterie secondaire (5) selon la revendication 6 ou le module de batterie (4) selon la revendication 7.

**9.** Appareil électrique comprenant la batterie secondaire (5) selon la revendication 6 et/ou le module de batterie (4) selon la revendication 7 et/ou le bloc-batterie (1) selon la revendication 8.

Second active material layer
First active material layer
Copper foil

FIG. 1

**5**

FIG. 2

FIG. 3

FIG. 4

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112735836 A
- WO 2021109133 A1
- CN 103633293 A
- CN 113097446 A
- GB 190772016 T